# EUROPEAN PATENT APPLICATION

(11) **EP 4 238 788 A2**
(43) Date of publication of application: **06.09.2023**
(21) Application number: 23159087.8
(22) Date of filing: 28.02.2023
(51) Int. Cl.: B60H 1/00

(54) **TRANSPORT REFRIGERATION UNITS FOR PRIMARY AND AUXILIARY APPLICATIONS**

(30) Priority: 01.03.2022 US 202263315239 P
(71) Applicant: Carrier Corporation, Palm Beach Gardens, FL 33418 (US)
(72) Inventor: OGGIANU, Stella Maris, Palm Beach Gardens, 33418 (US); VAN HASSEL, Bart Antonie, Palm Beach Gardens, 33418 (US)
(74) Representative: Dehns

(57) **Abstract**

A transport refrigeration system (200) includes: a transport refrigeration unit (22) configured to provide conditioned air (138) to a refrigerated cargo space (119) of a transport container (106); a power source (400) configured to provide electricity to the transport refrigeration unit (22), the power source (400) including a fuel cell (400); an electrical connector (712) electrically connecting the power source (400) to an electrical system (710) of an auxiliary structure (700); and a power management module (310) configured to provide the electricity from the power source (400) to at least one of the transport refrigeration unit (22) or the electrical system (710) through the electrical connector (712).

## Description

The embodiments herein generally relate to transport refrigeration units and more specifically, using the transport refrigeration units to provide cooling and/or electricity to auxiliary structures.

Refrigerated vehicles and trailers are commonly used to transport perishable goods. A transport refrigeration unit is commonly mounted to the vehicles or to the trailer in operative association with a cargo space defined within the vehicles or trailer for maintaining a controlled temperature environment within the cargo space.

Conventionally, transport refrigeration units used in connection with refrigerated vehicles and refrigerated trailers include a refrigerant compressor, a condenser with one or more associated condenser fans, an expansion device, and an evaporator with one or more associated evaporator fans, which are connected via appropriate refrigerant lines in a closed refrigerant flow circuit. Air or an air/gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On many commercially available transport refrigeration units the compressor, and typically other components of the transport refrigeration unit, is powered during transit by a prime mover, either through a direct mechanical coupling or a belt drive. Alternatively, the transport refrigeration unit may be electrically powered (e.g., using an alternating (AC) synchronous generator that generates AC power). The generated AC power is typically used to power an electric motor for driving the refrigerant compressor, and other components of the transport refrigeration unit. In a different electrically powered transport refrigeration unit, the AC generator may be replaced with a battery pack and associated power electronics to provide power to the loads.

According to a first aspect of the invention a transport refrigeration system is provided. The transport refrigeration system includes: a transport refrigeration unit configured to provide conditioned air to a refrigerated cargo space of a transport container; a power source configured to provide electricity to the transport refrigeration unit, the power source including a fuel cell; an electrical connector electrically connecting the power source to an electrical system of an auxiliary structure; and a power management module configured to provide the electricity from the power source to at least one of the transport refrigeration unit or the electrical system through the electrical connector.

The power management module may be configured to simultaneously provide the electricity from the power source to both the transport refrigeration unit and the electrical system through the electrical connector.

The power management module may be configured to provide the electricity from the power source only to the transport refrigeration unit.

The power management module may be configured to provide the electricity from the power source only to the electrical system through the electrical connector.

The system may include an auxiliary fuel tank not located within the transport refrigeration unit or a trailer system of the transport refrigeration unit, the auxiliary fuel tank being configured to provide fuel to the fuel cell.

The auxiliary structure may be a building, a vehicle, or another transport refrigeration unit.

According to another aspect of the invention, a transport refrigeration system is provided. The transport refrigeration system includes: a transport refrigeration unit configured to generate conditioned air, the transport refrigeration unit including an auxiliary outlet; a preconditioned air hose fluidly connecting the auxiliary outlet to at least one of an auxiliary structure or a climate control system of the auxiliary structure, wherein the transport refrigeration unit is configured to provide the conditioned air to at least one of a refrigerated cargo space of a transport container or the auxiliary outlet.

The system may include an output damper configured to direct the conditioned air to at least one of the refrigerated cargo space or the auxiliary outlet, wherein the transport refrigeration unit is configured to simultaneously provide the conditioned air to both the refrigerated cargo space and the auxiliary outlet using the output damper.

The system may include an output damper configured to direct the conditioned air to at least one of the refrigerated cargo space or the auxiliary outlet, wherein the transport refrigeration unit is configured to only provide the conditioned air to the refrigerated cargo space using the output damper.

The system may include an output damper configured to direct the conditioned air to at least one of the refrigerated cargo space or the auxiliary outlet, wherein the transport refrigeration unit is configured to only provide the conditioned air to the auxiliary outlet using the output damper.

The system may include a power source configured to provide electricity to the transport refrigeration unit, the power source including a fuel cell.

The system may include an auxiliary fuel tank not located within the transport refrigeration unit, the auxiliary fuel tank being configured to provide fuel to the fuel cell.

The auxiliary structure may be a building, a vehicle, or another transport refrigeration unit.

The transport refrigeration unit may further include an auxiliary return inlet, and wherein the transport refrigeration system further includes: a return hose fluidly connecting the auxiliary return inlet to at least one of the auxiliary structure or the climate control system of the auxiliary structure, wherein the transport refrigeration unit is configured to receive return air from at least one of the refrigerated cargo space or the auxiliary return inlet.

The system may include a return damper configured to allow the transport refrigeration unit to receive the return air from at least one of the refrigerated cargo space or the auxiliary return inlet, wherein the transport refrigeration unit is configured to simultaneously receive the return air from the refrigerated cargo space and the auxiliary return inlet using the return damper.

The system may include a return damper configured to allow the transport refrigeration unit to receive the return air from at least one of the refrigerated cargo space or the auxiliary return inlet, wherein the transport refrigeration unit is configured to only receive the return air from the refrigerated cargo space using the return damper.

The system may include a return damper configured to allow the transport refrigeration unit to receive the return air from at least one of the refrigerated cargo space or the auxiliary return inlet, wherein the transport refrigeration unit is configured to only receive the return air from the auxiliary return inlet using the return damper.

According to another aspect of the invention, a method of operating a transport refrigeration system is provided. The method includes: generating conditioned air for a refrigerated cargo space of a transport container using a transport refrigeration unit; generating or storing electricity for the transport refrigeration unit using a power source, the power source including a fuel cell; and providing at least one of the electricity to an auxiliary structure or the conditioned air to the auxiliary structure.

The method may include that providing at least one of the electricity to the auxiliary structure or the conditioned air to the auxiliary structure further includes: providing the electricity to the auxiliary structure.

The method may include that providing at least one of the electricity to the auxiliary structure or the conditioned air to the auxiliary structure further includes: providing the conditioned air to the auxiliary structure.

Technical effects of embodiments of the present invention include using a transport refrigeration unit to provide power to an auxiliary structure and/or provide conditioned air to the auxiliary structure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions should not be considered limiting in any way. Certain exemplary embodiments will now be described in greater detail, by way of example only, and with reference to the accompanying drawings, in which:
FIG. 1 is a schematic illustration of an exemplary transport refrigeration system;
FIG. 2 is an enlarged schematic illustration of an exemplary transport refrigeration unit of the transport refrigeration system of FIG. 1; and
FIG. 3 is a flow process illustrating an exemplary method of operating the transport refrigeration system of FIGS. 1 and 2.

A detailed description of one or more embodiments of the disclosed apparatus and method are presented herein by way of exemplification and not limitation with reference to the Figures.

Embodiments disclosed herein relate to using electricity and/or cooling from a transport refrigeration unit to provide power and/or cooling to an auxiliary structure.

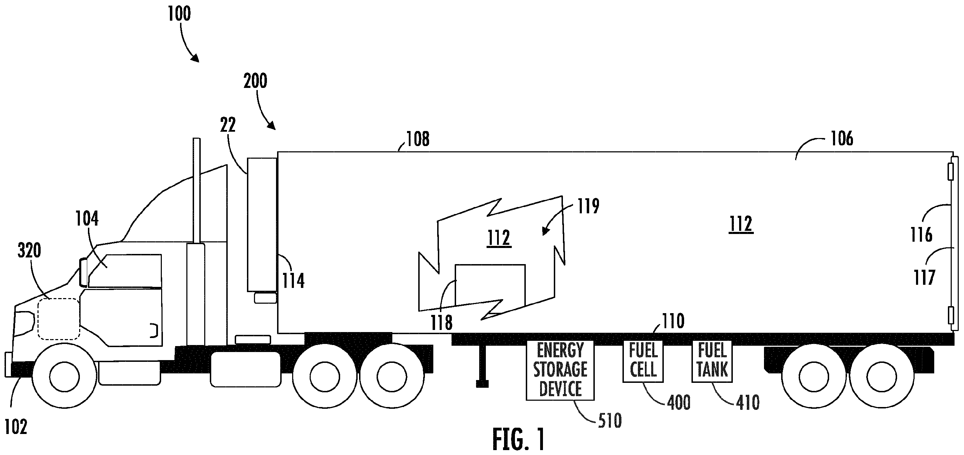

Referring now to FIG. 1, a schematic view of a transport refrigeration system 200 is illustrated, according to an embodiment of the present invention. The transport refrigeration system 200 is being illustrated as a trailer system 100, as seen in FIG. 1. The trailer system 100 includes a vehicle 102 integrally connected to a transport container 106. The vehicle 102 includes an operator's compartment or cab 104 and a propulsion motor 320 which acts as the drive system of the trailer system 100. The propulsion motor 320 is configured to power the vehicle 102. The energy source that powers the propulsion motor 320 may be at least one of compressed natural gas, liquefied natural gas, gasoline, electricity, diesel, hydrogen, electricity from a fuel cell, a electricity from a hydrogen fueled proton exchange membrane (PEM) fuel cell, electricity from a battery, electricity from a generator, or any combination thereof. The propulsion motor 320 may be an electric motor or a hybrid motor (e.g., a combustion engine and an electric motor). The transport container 106 is coupled to the vehicle 102. The transport container 106 may be removably coupled to the vehicle 102. The transport container 106 is a refrigerated trailer and includes a top wall 108, a directly opposed bottom wall 110, opposed side walls 112, and a front wall 114, with the front wall 114 being closest to the vehicle 102. The transport container 106 further includes a door or doors 117 at a rear wall 116, opposite the front wall 114. The walls of the transport container 106 define a refrigerated cargo space 119. It is appreciated by those of skill in the art that embodiments described herein may be applied to a tractor-trailer refrigerated system or non-trailer refrigeration such as, for example a rigid truck, a truck having refrigerated compartment, or a shipping container having a refrigerated compartment.

Typically, transport refrigeration systems 200 are used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring temperature controlled transport. The transport refrigeration unit 22 is in operative association with the refrigerated cargo space 119 and is configured to provide conditioned air to the transport container 106. The transport refrigeration unit 22 functions, under the control of the controller 600, to establish and regulate a desired environmental parameters, such as, for example temperature, pressure, humidity, carbon dioxide, ethylene, ozone, light exposure, vibration exposure, and other conditions in the refrigerated cargo space 119, as known to one of ordinary skill in the art. The transport refrigeration unit 22 may be capable of providing a desired temperature, carbon dioxide, and humidity range. The refrigerated cargo space 119 may be subdivided into one or more sub-spaces and the transport refrigeration unit 22 may be able to maintain a different temperature in each sub-space.

The transport refrigeration unit 22 is powered by a fuel cell 400 and/or an energy storage device 510. The fuel cell 400, associated fuel tanks 410, and energy storage device 510 may be attached to the trailer system 100. The fuel cell 400, associated fuel tanks 410, and/or energy storage device 510 may be attached to a bottom of the trailer system 100 (or within a housing of the transport refrigeration unit 22).

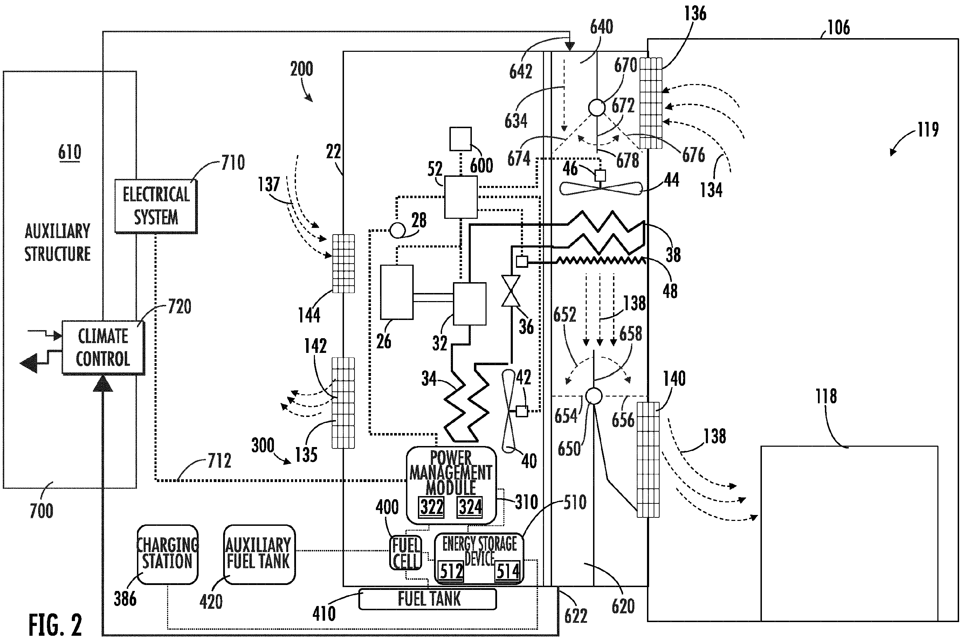

Referring now to FIG. 2, with continued reference to FIG. 1, an enlarged schematic view of a transport refrigeration system 200 is illustrated, according to an embodiment of the present invention. The transport refrigeration system 200 includes a transport refrigeration unit 22, a refrigerant compression device 32, an electric motor 26 for driving the refrigerant compression device 32, a controller 600, a refrigerant heat rejection heat exchanger 34, an expansion device 36, and a refrigerant heat absorption heat exchanger 38 connected in refrigerant flow communication in a closed loop refrigerant circuit and arranged in a conventional refrigeration cycle. The transport refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transport refrigeration unit 22 may also include a heater 48 associated with the refrigerant heat absorption heat exchanger 38. The heater 48 may be an electric resistance heater. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transport refrigeration unit 22 is operating in a subcritical refrigerant cycle or as a refrigerant gas cooler, such as if the transport refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from a return air intake 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat absorption heat exchanger 38 is supplied back to the refrigerated cargo space 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

Airflow is circulated into and through the refrigerated cargo space 119 of the transport container 106 by means of the transport refrigeration unit 22. A return air 134 flows into the transport refrigeration unit 22 from the refrigerated cargo space 119 through the transport refrigeration unit return air intake 136, and across the refrigerant heat absorption heat exchanger 38 via the fan 44, thus conditioning the return air 134 to a selected or predetermined temperature. The return air 134, now referred to as conditioned air 138, is supplied into the refrigerated cargo space 119 of the transport container 106 through the transport refrigeration unit outlet 140. Heat 135 is removed from the refrigerant heat rejection heat exchanger 34 through the heat outlet 142. The transport refrigeration unit 22 may contain an external air inlet 144, as shown in FIG. 2, to aid in the removal of heat 135 from the refrigerant heat rejection heat exchanger 34 by pulling in external air 137. The conditioned air 138 may cool the perishable goods 118 in the refrigerated cargo space 119 of the transport container 106. It is to be appreciated that the transport refrigeration unit 22 can further be operated in reverse to warm the transport container 106 when, for example, the outside temperature is very low. In the illustrated embodiment, the return air intake 136, the transport refrigeration unit outlet 140, the heat outlet 142, and the external air inlet 144 are configured as grilles to help prevent foreign objects from entering the transport refrigeration unit 22.

The transport refrigeration system 200 also includes a controller 600 configured for controlling the operation of the transport refrigeration system 200 including, but not limited to, the operation of various components of the refrigerant unit 22 to provide and maintain a desired thermal environment within the refrigerated cargo space 119. The controller 600 may also be able to selectively operate the electric motor 26. The controller 600 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

The fuel cell 400 may include an anode electrode and a cathode electrode separated by an electrolyte (not shown for simplicity). A reducing fluid such as hydrogen is supplied to the anode electrode, and an oxidant such as oxygen or air is supplied to the cathode electrode. In a cell utilizing a proton exchange membrane ("PEM") as the electrolyte, the hydrogen electrochemically reacts at a catalyst surface of the anode electrode to produce hydrogen ions and electrons. The electrons are conducted to an external load circuit (e.g., the transport refrigeration unit 22 or energy storage device 510) and then returned to the cathode electrode, while the hydrogen ions transfer through the electrolyte to the cathode electrode, where they react with the oxidant and electrons to produce water and release thermal energy. A fuel tank 410 is configured to store and provide the reducing fluid to the fuel cell 400. The reducing fluid may be hydrogen.

There may be one or more fuel cells 400 and one or more fuel tanks 410. In one embodiment, the fuel cell 400 may be located inside the transport refrigeration unit 22, as shown in FIG. 2. In another embodiment, the fuel cell 400 may be located outside of the transport refrigeration unit 22, as shown in FIG. 1. The fuel cell 400 may be located under the transport container 106 of the trailer system 100.

In one embodiment, the energy storage device 510 may be located within the transport refrigeration unit 22, as shown in FIG. 2. In another embodiment, the energy storage device 510 may be located outside of the transport refrigeration unit 22. The fuel cell 400 may power the transport refrigeration unit 22 directly or may provide electricity to the energy storage device 510, which then provides power to the transport refrigeration unit 22.

The energy storage device 510 may include a battery system 512, a capacitor 514, and/or any other electricity storage system known to one of skill in the art. The battery system 512 may comprise, chemical batteries, lithium-ion batteries, solid state batteries, flow batteries, or any other type of battery known to one of skill in the art. The battery system 512 may employ multiple batteries organized into battery banks. The capacitor 514 may be an electrolytic capacitor, a mica capacitor, a paper capacitor a film capacitor, a non-polarized capacitor, a ceramic capacitor, or any type of capacitor known to one of skill in the art.

The energy storage device 510 may be charged by a stationary charging station 386 such as, for example a three-phase 460Vac (60Hz) or 400Vac (50Hz) power outlet. The charging station 386 may provide single phase (e.g., level 2 charging capability) or three phase AC power to the energy storage device 510. It is understood that the charging station 386 may have any phase charging and embodiments disclosed herein are not limited to single phase or three phase AC power. The single phase AC power may be a high voltage DC power, such as, for example, 500VDC. One function of the charging station 386 is to balance the cell voltage of individual cells of the battery system at some regular cadence.

The transport refrigeration unit 22 has a plurality of electrical power demand loads on the energy storage device 510, including, but not limited to, the electric motor 26 for the compression device 32, the fan motor 42 for the fan 40 associated with the refrigerant heat rejection heat exchanger 34, and the fan motor 46 for the fan 44 associated with the refrigerant heat absorption heat exchanger 38. As each of the fan motors 42, 46 and the electric motor 26 may be an AC motor or a DC motor, it is to be understood that various power converters 52, such as AC to DC rectifiers, DC to AC inverters, AC to AC voltage/frequency converters, DC to DC voltage converters, and filters may be employed in connection with the energy storage device 510 as appropriate. In the depicted embodiment, the heater 48 also constitutes an electrical power demand load. The electric resistance heater 48 may be selectively operated by the controller 600 whenever a control temperature within the temperature controlled cargo box drops below a preset lower temperature limit, which may occur in a cold ambient environment. In such an event the controller 600 would activate the heater 48 to heat air circulated over the heater 48 by the fan(s) 44 associated with the refrigerant heat absorption heat exchanger 38. The heater 48 may also be used to de-ice the return air intake 136. Additionally, the electric motor 26 being used to power the refrigerant compression device 32 constitutes a demand load. The refrigerant compression device 32 may comprise a single-stage or multiple-stage compressor such as, for example, a reciprocating compressor or a scroll compressor. The transport refrigeration system 200 may also include a voltage sensor 28 to sense the voltage coming into the transport refrigeration unit 22.

The power demand loads of the transport refrigeration unit 22 may be managed and fulfilled by an energy management system 300. The energy management system 300 may include the fuel cell 400 and/or the energy storage device 510. The energy management system 300 includes a power management module 310 that is in communication with transport refrigeration unit 22, the fuel cell 400 and/or the one or more supplemental power sources 500.

The power management module 310 is configured to control the electricity provided to transport refrigeration unit 22 from the fuel cell 400 and/or the energy storage device 510.

The power management module 310 may be an electronic controller including a processor 324 and an associated memory 322 comprising computer-executable instructions (i.e., computer program product) that, when executed by the processor 324, cause the processor 324 to perform various operations. The processor 324 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 322 may be but is not limited to a random access memory (RAM), read only memory (ROM), or other electronic, optical, magnetic or any other computer readable medium. While the power management module 310 is being illustrated and described herein as a separate electronic controller the embodiments described herein are applicable to the power management module 310 being incorporated as software within the controller 600 of the transport refrigeration unit 22 or a controller of the fuel cell 400.

The power management module 310 may be configured to generate electricity using the fuel cell 400 and provide the electricity to an electrical system 710 of an auxiliary structure 700. The auxiliary structure 700 may be a building, a vehicle, a second transport refrigeration unit, or any other structure that may require electricity. In one example, the power management module 310 may be configured to provide electricity to the electrical system 710 of a building in the event of a power outage. In another example, the power management module 310 may be configured to provide electricity to the electrical system 710 of an electric vehicle in the event of the electric vehicle lost power. In yet another example, the power management module 310 may be configured to provide electricity to a second transport refrigeration unit in the event the second transport refrigeration unit lost power on the road and the perishable goods 118 of the second transport refrigeration unit may be in danger of spoilage.

The power management module 310 may be configured to receive electricity from the electrical system 710 of the auxiliary structure 700. In one example, the power management module 310 may be configured to receive electricity from the electrical system 710 of the building in the event of a power outage of the transport refrigeration unit 22. In another example, the power management module 310 may be configured to receive electricity from the electrical system 710 of an electric vehicle in the event of the transport refrigeration unit lost power. In yet another example, the power management module 310 may be configured to receive electricity from a second transport refrigeration unit in the event the transport refrigeration unit 22 lost power on the road and the perishable goods 118 may be in danger of spoilage.

The power management module 310 may be configured to determine the power needs of the electrical system 710 of the auxiliary structure 700 and operate the fuel cell 400 to fulfil the power needs of the electrical system 710 of the auxiliary structure 700.

A communication system may exist between power management module 310 and an equivalent power management modules within the electrical system 710 of the auxiliary structure 700. When the systems are electrically couple, the loads in electrical system 710 may automatically withdraw power from the energy storage device 510 and/or from the fuel cell 400. There may be communications and power switches as safety mechanisms to ensure there are not 'outages' due to over-requirements of power.

The power management module 310 may include various power converters, such as AC to DC rectifiers, DC to AC inverters, AC to AC voltage/frequency converters, DC to DC voltage converters, and filters may be employed, as required, to provide electricity to the electrical system 710 of the auxiliary structure 700. The power management module 310 may be electrically connected to the electrical system 710 using an electrical connector 712. The electrical connector 712 may be an electrical hardwire, a wireless electrical transmission system, or any combination thereof. The power management module 310 may be configured to simultaneously provide electricity to both the transport refrigeration unit 22 and the electrical system 710.

The transport refrigeration unit 22 may be configured to generate conditioned air 138 using electricity from the fuel cell 400 and provide the conditioned air 138 to an auxiliary structure 700. In one example, the transport refrigeration unit 22 may be configured to provide conditioned air to one or several buildings in the event of a power outage or a loss of cooling capability. In another example, the transport refrigeration unit 22 may be configured to provide conditioned air to one or several vehicles in the event of the vehicle lost power or cooling capability. In yet another example, the transport refrigeration unit 22 may be configured to provide conditioned air to a second transport container in the event a second transport refrigeration unit operably connected to the second transport container lost power or cooling capability on the road and the perishable goods 118 may be in danger of spoilage.

The power management module 310 of the transport refrigeration unit 22 may be configured to determine the cooling needs of the auxiliary structure 700 and instruct the controller 600 to operate the transport refrigeration unit 22 to fulfill the cooling needs of the auxiliary structure 700. The controller 600 may be in wired or wireless communication with a temperature sensor 610 within the auxiliary structure 700 in order to determine the cooling needs of the auxiliary structure 700. The temperature sensor 610 may be a standalone temperature sensor, a temperature sensor of a climate control system 720, or a thermostat of the HVAC system 720. The climate control system 720 may be a heating, ventilation, and air-conditioning (HVAC) system 720 or a refrigeration system.

The transport refrigeration unit 22 may be directly connected to the climate control system 720 of the auxiliary structure 700 or the transport refrigeration unit 22 may be fluidly connected to the auxiliary structure 700 through a window, door, or any other opening of the auxiliary structure 700. The transport refrigeration unit 22 may include an auxiliary outlet 620 configured to receive the conditioned air 138 from the refrigerant heat absorption heat exchanger 38. A preconditioned air hose 622 may operably connect to the auxiliary outlet 620. The preconditioned air hose 622 may fluidly connect the auxiliary outlet 620 to the climate control system 720 and/or the auxiliary structure 700. The preconditioned air hose 622 is configured to deliver the conditioned air 138 from the auxiliary outlet 620 to the climate control system 720 and/or the auxiliary structure 700.

The transport refrigeration unit 22 may include an auxiliary return inlet 640 configured to receive the return air 634 from the climate control system 720 and/or auxiliary structure 700. A return hose 642 may operably connect to the auxiliary return inlet 640. The return hose 642 may fluidly connect the auxiliary return inlet 640 to the climate control system 720 and/or the auxiliary structure 700. The return hose 642 is configured to deliver the return air 634 to the auxiliary outlet 620 from the climate control system 720 and/or the auxiliary structure 700. Alternatively or additionally, the return hose 642 may also be configured to dump the return air 634 from the climate control system 720 and/or the auxiliary structure 700 outside.

The transport refrigeration unit 22 may be configured to simultaneously provide conditioned air 138 to both the transport container 106 and the auxiliary structures or the transport refrigeration unit 22 may be configured to provide conditioned air 138 to only the transport container 106 or the auxiliary structure 700 at any one time.

The transport refrigeration unit 22 may include an output damper 650 to direct the conditioned air 138 to the auxiliary outlet 620 and/or the refrigeration unit outlet 140. The output damper 650 may include a swinging gate 652. The output damper 650 may move the swinging gate 652 to a first position 654 to direct the conditioned air 138 only to the refrigeration unit outlet 140 and block the flow of the conditioned air 138 to the auxiliary outlet 620. The output damper 650 may move the swinging gate 652 to a second position 656 to direct the conditioned air 138 only to the auxiliary outlet 620 and block the flow of the conditioned air 138 to the refrigeration unit outlet 140. The output damper 650 may move the swinging gate 652 to a third position 658 to direct the conditioned air 138 to the auxiliary outlet 620 and the refrigeration unit outlet 140.

The transport refrigeration unit 22 may include a return damper 670 configured to allow the transport refrigeration unit 22 to receive the return air 634 from the auxiliary return inlet 640 and/or the transport refrigeration unit return air intake 136. The return damper 670 may include a swinging gate 672. The return damper 670 may move the swinging gate 672 to a first position 674 to receive the return air 134 from the refrigeration unit outlet 140 and block the return air 634 from the auxiliary return inlet 640. The return damper 670 may move the swinging gate 672 to a second position 676 to receive the return air 634 from the auxiliary return inlet 640 and block the return air 134 from the refrigeration unit outlet 140. The return damper 670 may move the swinging gate 672 to a third position 678 to receive the return air 634 from the auxiliary return inlet 640 and the return air 134 from the refrigeration unit outlet 140.

The fuel cell 400 may also be removably connected to an auxiliary fuel tank 420. The auxiliary fuel tank 420 may be configured to a store and provide a fuel for the fuel cell 400, such as, for example, hydrogen. The auxiliary fuel tank 420 may be separate from the transport refrigeration unit 22, transport refrigeration system 200, and the trailer system 100. The auxiliary fuel tank may not be located within the transport refrigeration unit 22 or the trailer system 100. The auxiliary fuel tank 420 can be exchanged with new auxiliary fuel tanks 420 and/or refilled, once empty or low. The auxiliary fuel tank 420 is essentially a refill fuel tank that may provide the fuel cell 400 with a near endless supply of fuel as it can be continuously switched out. In one example, the auxiliary fuel tank 420 may be a large hydrogen fuel tanker truck that may be parked next to the trailer system 100 and provide the fuel cell 400 with a long lasting source of hydrogen, which advantageously would be beneficial during natural disasters as the transport refrigeration unit 22 may be used as a generator to provide electricity and/or as mobile air-conditioning unit to provide cooling air.

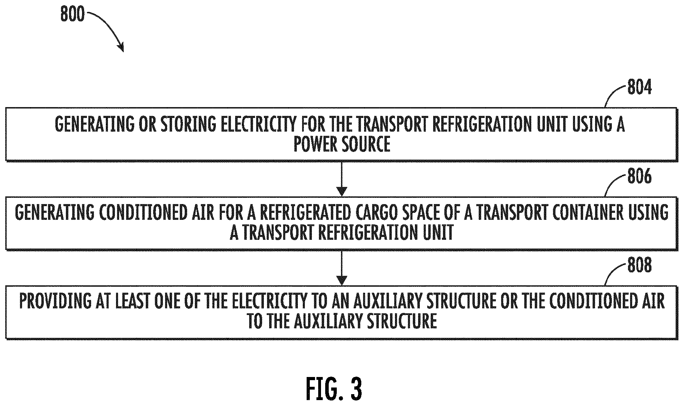

Referring now to FIG. 3, with continued reference to FIGS. 1 and 2. A flow process of a method 800 of operating a transport refrigeration system 20 is illustrated, according to an embodiment of the present invention. The method 800 may be performed by the power management module 310 and/or the controller 600 of the transport refrigeration unit 22.

At block 804, electricity for the transport refrigeration unit is generated and/or stored using a power source. At block 806 conditioned air 138 is generated for a refrigerated cargo space 119 of a transport container 106 using a transport refrigeration unit 22.

The power source may be the fuel cell 400 or 420. It is understood that while a fuel cell 400 is mainly described herein, the embodiments disclosed herein may be utilized with other power sources, such as electric batteries, internal combustion engines, hybrid engines, or any combination thereof.

At block 808, at least one of the electricity is provided to an auxiliary structure 700 or the conditioned air 138 is provided to the auxiliary structure 700. The electricity may be provided to the auxiliary structure 700. In another embodiment, the conditioned air 138 is provided to the auxiliary structure 700. In yet another embodiment, both the electricity and the conditioner air 138 are provided to the auxiliary structure 700. The electricity may be provided to the electrical system 710 of the auxiliary structure 700. Alternatively, the conditioned air 138 is provided to the climate control system 720 of the auxiliary structure 700. Alternatively, both the electricity is provided to the electrical system 710 of the auxiliary structure 700 and the conditioned air 138 is provided to the climate control system 720 of the auxiliary structure 700.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as processor. Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present invention without departing from the scope of the invention. Therefore, it is intended that the present invention not be limited to the particular embodiment disclosed as a best mode contemplated for carrying out this present invention, but that the present invention will include all embodiments falling within the scope of the claims.

## Claims

1. A transport refrigeration system (200) comprising:
a transport refrigeration unit (22) configured to provide conditioned air (138) to a refrigerated cargo space (119) of a transport container (106);
a power source (400) configured to provide electricity to the transport refrigeration unit (22), the power source (400) comprising a fuel cell (400);
an electrical connector (712) electrically connecting the power source (400) to an electrical system (710) of an auxiliary structure (700); and
a power management module (310) configured to provide the electricity from the power source (400) to at least one of the transport refrigeration unit (22) or the electrical system (710) through the electrical connector (712).

2. The transport refrigeration system (200) of claim 1, wherein the power management module (310) is configured to:
simultaneously provide the electricity from the power source (400) to both the transport refrigeration unit (22) and the electrical system (710) through the electrical connector (712); or
provide the electricity from the power source (400) only to the transport refrigeration unit (22); or
provide the electricity from the power source (400) only to the electrical system (710) through the electrical connector (712).

3. The transport refrigeration system (200) of claim 1 or 2, further comprising:
an auxiliary fuel tank (420) not located within the transport refrigeration unit (22) or a trailer system (100) of the transport refrigeration unit (22), the auxiliary fuel tank (420) being configured to provide fuel to the fuel cell (400).

4. The transport refrigeration system (200) of claim 1, 2 or 3, wherein the auxiliary structure (700) is a building, a vehicle, or another transport refrigeration unit (22).

5. A transport refrigeration system (200) comprising:
a transport refrigeration unit (22) configured to generate conditioned air (138), the transport refrigeration unit (22) comprising an auxiliary outlet (620);
a preconditioned air hose (622) fluidly connecting the auxiliary outlet (620) to at least one of an auxiliary structure (700) or a climate control system (720) of the auxiliary structure (700),
wherein the transport refrigeration unit (22) is configured to provide the conditioned air (138) to at least one of a refrigerated cargo space (119) of a transport container (106) or the auxiliary outlet (620).

6. The transport refrigeration system (200) of claim 5, further comprising:
an output damper (650) configured to direct the conditioned air (138) to at least one of the refrigerated cargo space (119) or the auxiliary outlet (620),
wherein the transport refrigeration unit (22) is configured to:
simultaneously provide the conditioned air (138) to both the refrigerated cargo space (119) and the auxiliary outlet (620) using the output damper (650); or
only provide the conditioned air (138) to the refrigerated cargo space (119) using the output damper (650); or
only provide the conditioned air (138) to the auxiliary outlet (620) using the output damper (650).

7. The transport refrigeration system (200) of claim 5 or 6, further comprising:
a power source (400) configured to provide electricity to the transport refrigeration unit (22), the power source (400) comprising a fuel cell (400).

8. The transport refrigeration system (200) of claim 7, further comprising:
an auxiliary fuel tank (420) not located within the transport refrigeration unit (22), the auxiliary fuel tank (420) being configured to provide fuel to the fuel cell (400).

9. The transport refrigeration system (200) of any of claims 5 to 8, wherein the auxiliary structure (700) is a building, a vehicle, or another transport refrigeration unit (22).

10. The transport refrigeration system (200) of any of claims 5 to 9, wherein the transport refrigeration unit (22) further comprises an auxiliary return inlet (640), and wherein the transport refrigeration system (200) further comprises:
a return hose (642) fluidly connecting the auxiliary return inlet (640) to at least one of the auxiliary structure (700) or the climate control system (720) of the auxiliary structure (700),
wherein the transport refrigeration unit (22) is configured to receive return air (634) from at least one of the refrigerated cargo space (119) or the auxiliary return inlet (640).

11. The transport refrigeration system (200) of claim 10, further comprising:
a return damper (670) configured to allow the transport refrigeration unit (22) to receive the return air (634) from at least one of the refrigerated cargo space (119) or the auxiliary return inlet (640),
wherein the transport refrigeration unit (22) is configured to simultaneously receive the return air (634) from the refrigerated cargo space (119) and the auxiliary return inlet (640) using the return damper (670).

12. The transport refrigeration system (200) of claim 10 or 11, further comprising:
a return damper (670) configured to allow the transport refrigeration unit (22) to receive the return air (634) from at least one of the refrigerated cargo space (119) or the auxiliary return inlet (640),
wherein the transport refrigeration unit (22) is configured to:
only receive the return air (634) from the refrigerated cargo space (119) using the return damper (670); or
only receive the return air (634) from the auxiliary return inlet (640) using the return damper (670).

13. A method of operating a transport refrigeration system (200), the method comprising:
generating conditioned air (138) for a refrigerated cargo space (119) of a transport container (106) using a transport refrigeration unit (22);
generating or storing electricity for the transport refrigeration unit (22) using a power source (400), the power source (400) comprising a fuel cell (400); and
providing at least one of the electricity to an auxiliary structure (700) or the conditioned air (138) to the auxiliary structure (700).

14. The method of claim 13, wherein providing at least one of the electricity to the auxiliary structure (700) or the conditioned air (138) to the auxiliary structure (700) further comprises:
providing the electricity to the auxiliary structure (700).

15. The method of claim 13 or 14, wherein providing at least one of the electricity to the auxiliary structure (700) or the conditioned air (138) to the auxiliary structure (700) further comprises:
providing the conditioned air (138) to the auxiliary structure (700).
